(19) Europäisches Patentamt
European Patent Office
Office européen des brevets

(11) **EP 2 949 217 B1**

(12) **EUROPEAN PATENT SPECIFICATION**

(45) Date of publication and mention
of the grant of the patent:
**27.02.2019 Bulletin 2019/09**

(51) Int Cl.:
**A21D 2/18** *(2006.01)* **A21D 2/36** *(2006.01)*
**A21D 13/00** *(2017.01)*

(21) Application number: **14170413.0**

(22) Date of filing: **28.05.2014**

(54) **Multi-texture cookie**

Keks mit mehreren Texturen

Biscuit multi-texture

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.12.2015 Bulletin 2015/49**

(73) Proprietor: **Generale Biscuit
92140 Clamart (FR)**

(72) Inventors:
• **Roussel, Cecile
41000 Blois (FR)**
• **Borges, Rui
91200 Athis Mons (FR)**
• **Aymard, Pierre
92160 ANTONY (FR)**
• **Sence, Claude
F-94440 Villecresnes (FR)**

(74) Representative: **Boult Wade Tennant LLP
Verulam Gardens
70 Gray's Inn Road
London WC1X 8BT (GB)**

(56) References cited:
**EP-A2- 0 136 159    EP-A2- 0 181 821
EP-A2- 0 219 425    EP-A2- 0 372 596
US-A- 4 219 580**

• **KULP K ET AL: "FUNCTIONALITY OF
CARBOHYDRATE INGREDIENTS IN BAKERY
PRODUCTS", FOOD TECHNOLOGY, INSTITUTE
OF FOOD TECHNOLOGISTS, CHICAGO, IL, US,
vol. 45, no. 3, 1 March 1991 (1991-03-01), pages
136,138-140,14, XP000206555, ISSN: 0015-6639**
• **ARTZ W E ET AL: "INCORPORATION OF CORN
FIBER INTO SUGAR SNAP COOKIES", CEREAL
CHEMISTRY, AACC INTERNATIONAL INC, US,
vol. 67, no. 3, 1 May 1990 (1990-05-01), pages
303-305, XP000138277, ISSN: 0009-0352**

EP 2 949 217 B1

**Description**

The present disclosure relates to a cookie product, a dough precursor for forming the cookie product and a method for producing the cookie. In particular, the disclosure relates to a cookie product that has a texture contrast similar to that of a freshly baked cookie, while achieving a long lasting shelf stability.

It is known that freshly baked cookies can have a highly desirable texture, but that this is lost over time due to staling and moisture loss. In particular, a fresh cookie may have a crispy or crunchy outer surface, but a chewy or even gooey centre. The centre may even have a texture approaching that of uncooked cookie dough. It is known, however, that such products do not maintain this dual texture on storage: moisture transfer and loss during storage lead to the product becoming dry and unappetising. For this reason, most long-term stable cookie products are often sold with a continuous crispy texture, or soft and chewy texture throughout, without a texture contrast.

Coextrusion methods for the manufacture of filled products are well known. Indeed, commonly available coextrusion machines are available from a number of machine suppliers which can coextrude materials for forming filled products, where a filling is entirely encompassed within an outer material. For example, US4251201 and US4882185 disclose standard coextrusion processes.

It is known to provide cookie products by coextruding two doughs. For example, US4584203, incorporated herein by reference, discloses a method of forming a cookie using two doughs. This allows for the provision of discrete regions of an inner dough which remain chewy and a continuous outer dough portion which is crispier. The inner dough is made more chewy by the addition of high fructose corn syrup (HFCS), which is a humectant, in a greater amount than in the outer dough. Other similar products are known from EP0181821 and EP0031718, which also rely on the use of humectants to provide a chewy inner dough.

Another approach is described in EP0208509, which provides a laminated product and wherein the inner chewy dough is provided by using a pregelatinized starch and a humectant. EP0219425 provides a multi-texture cookie where the chewy inner dough is provided by a humectant. The outer dough is made more crispy with casein and an edible water-soluble phosphate.

EP 0219425 discloses a process and dough composition for producing multi-textured cookies.

EP 0181821 discloses a method and dough compositions for making shelf-stable soft or chewy cookies.

Other solutions to providing simultaneously a crispy and a chewy texture include using a fat filling, an internal barrier coating or addition of different ingredients such as inclusions, hydrocolloids, humectants, gums, crystallization inhibitors (like HFCS), to reinforce the crunchiness or the softness. These solutions can sometimes be detrimental to the appearance, taste and/or texture.

Therefore, one aim is to provide a cookie having a long shelf stability and a multi-texture that tackles the drawbacks associated with the prior art, or at least provides a commercial alternative thereto.

According to a first aspect, there is provided a cookie precursor in accordance with claim 1.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. In particular, aspects described with relation to the cookie precursor can be applied equally to the cookie and vice versa.

The terms "first dough", "first dough mix", "external dough" and "outer dough" are used interchangeably in this disclosure. These terms are used to refer to the dough which forms, after baking, the crispy and crunchier portion of the multi-texture cookie described herein. Similarly, the terms "second dough", "second dough mix", "internal dough" and "inner dough" are used interchangeably in this disclosure. These terms are used to refer to the dough which forms, after baking, the softer and chewy portion of the multi-texture cookie described herein.

By the term "flour" is meant the powder obtained by grinding or milling cereals such as wheat, oat, barley, rye, rice, corn, millet and the like and pseudo-cereals such as buckwheat and quinoa. The flour can be a "whole" flour, that is to say, a ground or milled grain whose principal components - the starchy endosperm, the germ and the bran - are present in the same relative proportions as they are in the intact grain. Preferably, the flour is a wheat flour, that is to say, the product prepared from wheat grain by grinding or milling processes in which the bran and germ are at least partially removed and the portion that remains is ground to a suitable degree of fineness. In the context of the present disclosure, the term "flour" does not include extraneous starches such as corn starches or modified starches.

By the term "starches" it is meant extraneous starches, that is to say, starches that are added to the dough mix separately and do not form part of the flour or any other component of the inner dough. Starches are carbohydrates comprising a large number of glucose units joined by glycosidic bonds. Common sources of starches include potatoes, wheat, corn and rice. Native starches are those which are not modified following isolation from their source, such as native potato starch.

In the native form, starches are present as partially crystalline "granules" that are insoluble in water. Upon heating in water, the granules swell and burst, the semicrystalline structure is lost and the more linear amylose molecules start leaching out of the granule, increasing the mixture's viscosity. This process is called starch gelatinization. During cooking, the starch becomes a paste and increases further in viscosity. A native starch has not been gelatinized. By contrast, a pregelatinized starch, such as a pre-cooked starch, has been at least partially gelatinized. Pregelatinized starches, such as pregelatinized corn starch, are commercially available.

Other types of starches include modified starches, that is, a starch that has been modified to allow enhance function under conditions frequently encountered during processing and storage. These modifications can be achieved by, for example, acid treatment, alkali treatment, oxidation, acetylation and the like. Modified starches are commercially available.

By the term "sugars" is meant simple sugars (degree of polymerisation = 1) such as glucose and fructose, as well as disaccharides (degree of polymerisation = 2) such as sucrose and maltose. The term "sugars" as used herein does not include "oligosaccharides", which are digestible carbohydrates having a degree of polymerisation of 3 or above. A suitable source of such oligosaccharides is glucose syrup, which contains sugars as well as oligosaccharides (maltotriose DP3, maltotetraose DP4, etc). In most glucose syrups, the oligosaccharides fraction contains oligosaccharides having degrees of polymerisation of from 3 to about 100 for a poorly hydrolyzed syrup (low "dextrose equivalent" -DE-) and of from 3 to about 10 for a more hydrolyzed syrup (high DE). As will be appreciated, the sugar content of glucose syrup will vary depending on the source. Based on the source, the desired amounts for inclusion in a dough mix can be calculated.

By the term "cookie" is meant a sweet biscuit. Cookies are well known in the art and are typically made from flour, eggs, sugar and oil. They are often found with one or more inclusions, such as chocolate chips or raisins. Freshly baked or home-made cookies typically have a crisp outer surface and a gooey centre. Some commercial cookies tend to have a harder aspect throughout.

A cookie precursor is, therefore, the dough which, when baked, provides a cookie. The inventors have found that it is possible to provide a long shelf-life cookie product with a crunchy outer region and retaining one or more inner chewy regions. The inventors have found that this can be achieved by coextruding two different dough formulations. Surprisingly, they found that the shelf stability of this product is greatly enhanced by the control of the flour content of the two doughs. Moreover, the substitution of the flour from the inner dough with starches and fibers allows both a large difference in the moisture between the inner and outer dough portions, and maintains this difference stably during long term storage.

The method described herein uses two approaches to maximise the dual texture distinctions. The first is to increase the crispness and crunchiness of the outer dough. The inventors found that this can be achieved by increasing the flour content, certain starches, such as pea starch and adding egg components, and varying the sugar composition (increasing the amount of mono and disaccharides relative to oligosaccharides).

The second is to decrease the crispness and crunchiness (i.e. increase the softness) of the inner dough. The inventors found that this can be achieved by developing a dough with a low flour content. It has been found that the use of a low flour content is aided by certain measures to improve the workability of the remaining formulation, such as replacing the flour with a mix of starches and fibers, and incorporating certain fats into the dough. In addition, it was possible to increase the softness by reducing crystallisation in the inner dough mixture. This could be achieved by reducing the amount of sugars relative to the amount of oligosaccharides, and by adding humectants such as glycerol.

Thus, the cookie precursor comprises a first dough mix which comprises from 30 to 80wt% flour, preferably from 30 to 50 wt%, more preferably about 40wt%. This provides a workable dough and a crunchy final outer surface to the biscuit.

The cookie precursor comprises a second dough mix which comprises less than 5wt% flour, more preferably less than 1wt% flour, and, more preferably still, substantially no flour. The low flour content has been found to be critical to ensuring that the inner dough is soft and remains soft during long term storage.

In softening the inner dough, it is necessary to ensure that the dough has a suitable rheology for use in the manufacture process and is sufficiently cohesive and workable for extrusion, despite the low flour content. The approach adopted was to control the dough texture during the manufacture at the process temperature. This could be achieved by selecting the non-lipid ingredients which structure the dough such as a blend of starches and by using insoluble fibre with high water retention capacity.

In particular, it was found that certain insoluble dietary fibers, such as soy fibers, aided this approach and it was considered, without wishing to be bound by theory, that this was the result of a high water retention capacity of those fibers. Certain sources of dietary fibers, such as cocoa powder, could also be used to this effect. It was also found that certain non-viscous soluble fibers, such as acacia gum, provided a moist mouthfeel.

The second dough mix contains fibers in an amount such that the amount by weight included in the second dough mix multiplied by the water holding capacity (WHC) of the fiber is at least 10. Preferably this value is at most 13, more preferably at most 12. The measurement of WHC is described below. The greater the WHC of the starches and fibers selected, the better their binding capacity and the better the consistency of the second dough. Thus, starches and fibers having a relatively high WHC need to be used in lower amounts to achieve an equivalent effect.

It was found that certain starches increased the viscosity of the dough, preventing excessive spreading and leakage of the inner dough during processing. These starches preferably comprise a blend of native starch and pregelatinized starch. These starches provide a softer dough texture than could be obtained without flour replacement, and reduced degradation of the finished product throughout its shelf-life. Preferably, the blend comprises native potato starch and pregelatinized corn starch. This was found to impart a soft texture to the centre of the resulting cookie that is maintained throughout its shelf-life. The starches and fibers are preferably extraneous.

Thus, the second dough mix comprises one or more starches and fibers in a total amount of from 5 to 20 wt%, preferably from 10 to 20 wt%. Preferably the starches and fibers comprise a blend of native starch and pregelatinized starch, and/or soy fibers and/or cocoa powder.

As explained previously, another means of controlling the dough texture during manufacture was through careful choice of added fat ingredients. In particular, it was found that the use of high SFC fat having an SFC of at least 20 wt% at 20 °C such as cocoa butter or shea stearin, in addition to palm oil, allowed the texturing of the soft inner dough and made it especially suitable for the co-extrusion process. This allowed the formation of a lower dough density in the region of 0.8-1.0 g/cm$^3$. Preferably the second dough mix comprises cocoa butter in an amount of from 2 to 14wt%, more preferably from 8 to 14 wt%, more preferably still from 10 to 12wt%. The inventors have found that the use of cocoa butter in the formulation is particularly desirable because the cocoa butter helps to make the second dough stiffer and more workable and prevents the dough being too thin or fluid. In addition, it affects the amount of air which can be retained in the dough on mixing. The cocoa butter may be provided as an isolated fat. Alternatively, the cocoa butter may be formed in situ through the addition of chocolate mass and cocoa powder to the dough mix.

The added fats preferably comprise a blend of palm oil and cocoa butter.

The Solid Fat Content (SFC) of the blend of fats included in the second dough mix at 20 ºC is at least 20wt%, more preferably at least 30wt%, and preferably less than 60wt%. It has been found that through the addition of blends having such SFC values, it is possible to provide an inner dough with sufficient rigidity for coextrusion at the process temperature, without compromising the soft texture required in the final product. SFC measurements are well known in the art and are disclosed in US 4,840,803, the content of which is incorporated herein by reference.

Accordingly, the present inventors have developed a food composition for the inner dough which is neither a filling nor a standard dough. It is not a filling because it does contain baking powders and therefore rises during baking. It is not a standard dough because it does not contain flour or only a small amount (<5wt%). This has been achieved by identifying a mix of starches and fibers that give rise to a soft, shelf-life stable continuous dough and by avoiding using flour, which would degrade over time and give an evolving texture and moisture content. In particular, there is achieved a typical moisture difference between outer and inner dough of at least 30wt%, even if the inner dough is not fully encompassed by the outer dough after baking. This is achieved without the use of barrier film or any other technology aiming at limiting moisture migration.

The second dough mix forms one or more discrete regions within the first dough mix. Preferably the second dough mix is entirely encompassed by the first dough mix.

It has been found that the use of two dough formulations as described herein does not lead to any visible transition between the outside and inside of the cookie. This helps to maintain the impression of a "freshly-baked" product.

Preferably the precursor is approximately disc-shaped and, preferably, has a diameter of from 4 to 5cm, although larger and smaller precursors are contemplated. Preferably the cookie precursor has an outer peripheral portion comprising the first dough mix and an inner central portion comprising the second dough mix. The level of spreading during baking is determined by the formulation and lies within a standard cookie range. Preferably the weight of the cookie after baking is approximately 25 to 30g without toppings.

Preferably the cookie precursor further comprises one or more regions of a third dough mix. The presence of a third dough mix can be used to add one or more regions having a further texture. For example, a softer centre could be provided or, alternatively, a centre having a different flavour or colour could be provided, but having a similar texture to the second dough.

The ratio by weight of the first dough mix to the second dough mix is from 80:20 to 50:50, more preferably from 70:30 to 60:40. The use of equal or larger amounts of the first dough helps to make the precursor more dimensionally stable during processing and during baking. Where the amount of the second dough is more than 50wt%, the risk of the softer dough spreading is increased.

Preferably the first dough mix further differs from the second dough mix by at least one of flavouring and/or colouring. The presence, for example, of cocoa powder in one or other of the dough mixes allows for a darker or lighter portion to be formed. Even so, the inventors have found that with such formulations there is no clear border between the dough regions in the final product, such as is present with cookies having internal borders.

Preferably the first dough mix comprises fats in an amount of from 10 to 20wt%; and/or sugars in an amount of from 5 to 30 wt%, preferably from 20 to 30wt%. These amounts of fat and sugar provide a suitable dough, without compromising the machinability of the dough.

Preferably the second dough mix comprises fats in an amount of from 15 to 35 wt%, preferably from 15 to 25 wt%; and/or sugars in an amount of from 10 to 25 wt%, preferably from 17 to 23 wt%; and/or oligosaccharides in an amount of 10 to 25 wt%, preferably from 17 to 23 wt%. These amounts of fat and sugar provide a suitable dough, without compromising the machinability of the dough. The amount of sugar and fat in the second dough mix can be greater than for the first dough mix because of the lower flour content and the use of the starches and fibers.

While sweet formulations have been discussed above, the product may alternatively possess both sweet and savoury sensory attributes. Thus, the first dough mix may be savoury, and the second dough mix may be sweet but with a savoury flavouring.

A savoury flavour may be imparted to the second dough mix by including dried cheese powder in the second dough mix, preferably in an amount of from 4 to 8wt%. When dried cheese powder is included, the amount of sugars present in the second dough mix may be decreased, for example to 10-20wt%, preferably to 10-17wt%. The first dough mix in this embodiment is typical of a cracker dough, having low levels of sugar and high levels of flour. In this embodiment, the processability of the first and second dough mixes is such that they are preferably double sheeted rather than coextruded.

The inventors performed detailed testing on the rheology of the first and second dough mixes. This was to characterize the dough mixes at room temperature (after mixing) and upon heating (to mimic baking) using a combination of techniques (compression and small-strain oscillatory measurements). They concluded that the use of starches and fibers, especially pre-gelatinized starches, has a role to control the evolution of rheology upon heating. When replaced by flour, some softening impact is observed at room temperature but there is especially a dramatic loss in texture upon heating. This thinning explains why the inner dough leaks out the product during baking, leading to unacceptable products.

As discussed above, the inventors have found that certain starches have a structuring role. They contribute to a dough rheology at ambient temperature that is compatible with the co-extrusion process. Cocoa butter also contributes to have a dough rheology at the process temperature that fits to the co-extrusion process. The low density obtained with palm-oil-based dough is, by contrast, detrimental to the co-extrusion process, since it increases the volume of the inner dough, increases the dough's elasticity and may lead to excessive oven-raise during baking.

The first and/or second dough mixes preferably comprise added sugars and added oligosaccharides. The inventors have surprisingly found that it is possible to increase the crispness and crunchiness of the outer dough by using a large amount of sugars (that is, mono and di-saccharides) in the dough relative to oligosaccharides. Thus, the first dough mix preferably comprises added sugars in an amount of at least 80wt%, preferably at least 90wt%, more preferably at least 95wt%, and preferably at most 99.9wt%, by weight of the total added sugars and oligosaccharides in the first dough. It has further been found that it is possible to increase the softness of the inner dough by using a reduced amount of sugar relative to the oligosaccharide content of the dough. Thus, the second dough preferably comprises added sugars in an amount of less than 80wt%, preferably less than 65wt%, more preferably less than 55wt%, and preferably at least 35% by weight of the total added sugars and oligosaccharides in the second dough.

Preferably the second dough mix comprises one or more humectants and/or acacia gum. These ingredients have been found to increase the moist mouthfeel. Moreover, the use of humectants, such as glycerol, in place of readily crystallized sugars and increasing the proportion of oligosaccharides relative to monosaccharides helps to provide a soft inner dough and a final product that is stable throughout its shelf-life.

Preferably the ratio of the $F_{AV}$ values of the first dough mix to the second dough mix is at least 3:1 and preferably from 3:1 to 8:1. The measurement of this parameter is discussed below. The inventors have found that this ratio reflects a measure of the final consistency and texture difference between the inner and outer portions of the cookie product. That is, the greater the $F_{AV}$ ratio, the more chewy the centre compared to the crispy outer surface.

Preferably the first and/or second dough mix further comprises a plurality of inclusions in an amount of from 5 to 25 wt%, preferably from 5 to 15 wt%, by weight of the dough mix, preferably selected from nuts, jellies, nougat, honeycomb, flavoured chips such as chocolate chips, coconut, toffee, oats, seeds, caramel, fudge, hard candy, marshmallows, cherries, raisins and dried fruit, or mixtures of two or more thereof. These add a further textural dimension to the product.

Preferably the cookie precursor further comprises a topping in an amount of from 5 to 25 wt%, preferably from 5 to 15 wt%, by weight of the cookie precursor, wherein the topping is preferably selected from a glaze, a coating, such as a chocolate or yoghurt coating, nuts, jellies, nougat, honeycomb, oats, seeds, flavoured chips such as chocolate chips, coconut, toffee, fudge, hard candy, marshmallows, cherries, raisins and dried fruit, or mixtures of two or more thereof.

According to a second aspect there is provided a cookie obtainable by baking the cookie precursor disclosed herein.

Preferably the cookie is shelf stable for at least 6 months when stored at 20°C, and preferably at least 9 months when stored at 20°C.

The water activity (Aw) of a product is a notion which is well known in the food industry field. This value measures the availability of water in a sample. In most cases, this water activity is not proportional to the water content of the product. Methods for measuring Aw of a product are known to the person skilled in the art. For example, it can be measured with an Aqualab CX-2 or series 3, or a Novasina. All Aw values indicated hereafter are measured at $25\pm0.1$ °C.

Typically, crispy products have a low moisture of less than 4wt% and a low Water Activity (Aw) of less than 0.3. To the contrary, soft products usually have a high moisture of at least 10wt% and an Aw of more than 0.65. When you combine crispy and soft products, an equilibrium is established whereby the product is neither satisfactorily crispy or soft. The inventors have found that the product can have a total moisture content and Aw between these typical values, because by avoiding the inclusion of flour but still providing a workable dough formulation, the texture contrast can be maintained for a long shelf life due to water and Aw remaining stable.

The cookie produced with the method described herein preferably has a final moisture content between 5 wt% and 9 wt% and a final Aw between 0.44 and 0.6. Importantly, this dual texture can be maintained for at least 6 months and preferably at least 9 months of shelf storage since even when the Aw equilibrium is reached, regions of greater and lower moisture content are maintained. For instance the cookie of Example 1 has an average moisture content of 7.1wt% and more specifically a moisture content of 5.7wt% in the external dough and of 9.6wt% in the inner dough. This corresponds to a moisture content difference of 70% while the Aw is equivalent and equal to 0.5 in both doughs. Preferably the cookie has an Aw of from 0.45 to 0.55. Preferably the cookie has a moisture content of from 5 to 8wt%, more preferably from 7 to 8 wt%.

According to a third aspect there is provided a method for forming a cookie precursor in accordance with claim 13.

Preferably the method of making a cookie precursor of the third aspect is for making the precursor of the first aspect.

Preferably the first dough mix and the second dough mix are coextruded to form the cookie precursor. The disclosure provides a solution by replacing the flour in the internal dough to get this contrast of texture with the external dough and provide a long shelf life without having any issues during the process (co-extrusion, baking, cooling). From a processing standpoint co-extrusion is preferred since it is efficient and reproducible. Nonetheless, a sheeting technology could be used, whereby the inner dough is sandwiched between layers of the outer dough.

Preferably the method further comprises baking the cookie precursor to form a cookie.

Preferably the method further comprises (i) applying a coating and/or filling to the cookie; and/or (ii) packaging the cookie.

Preferably the cookie disclosed herein is not a filled cookie. That is, the final product does not contain a liquid ingredient, but instead has an apparently continuous texture between the inner and outer portions after baking.

In one embodiment the cookie is prepared with gluten-free flour. This makes the product suitable for consumption by those with a gluten intolerance. Moreover, due to the specific composition of the inner dough, the recipe is not unduly affected by the use of gluten-free ingredients.

It was found that the dual texture cookie structure, as described herein, further required some specific adjustments to the baking and cooling profiles as shown in the examples.

## Figures

The present disclosure will be described in relation to the following non-limiting figures, in which:

Figure 1 is a cross-section through a cookie of Example 1.

Figure 2 is a bar chart illustrating the elastic moduli of the doughs of the Examples at 22 °C and at 90 °C.

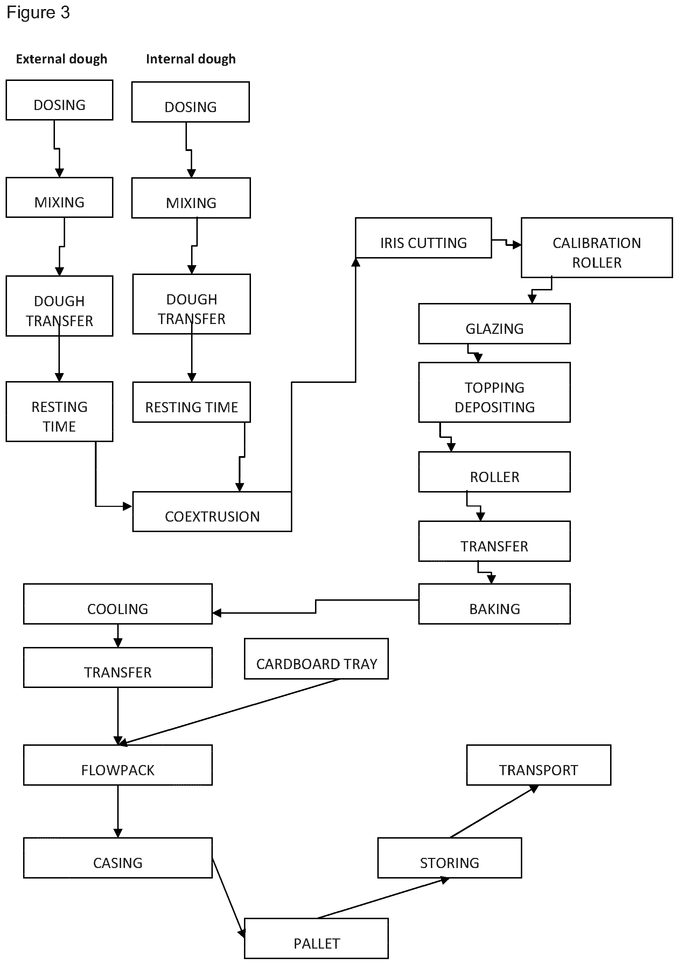

Figure 3 is a flowchart illustrating the different steps of one embodiment of the method for producing a cookie as described herein.

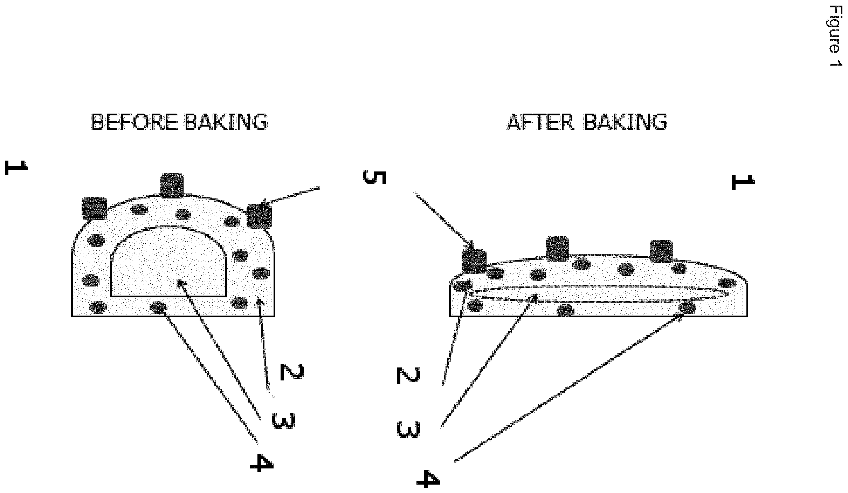

Figure 1 shows a cookie 1, formed from an outer dough 2, and inner dough 3 and having chocolate pieces as an inclusion 4 and a topping 5. The cookie 1 shown has an outer diameter of 72 to 76mm and a weight of about 30-33g, including toppings. The inner dough has a soft, dense texture and forms 30-40wt% of the dough portion of the product, whereas the outer dough has a crusty texture and forms 60 to 70wt% of the dough portion of the product. In this example, there are additional chocolate drops incorporated into the external dough only.

## Examples

The present disclosure will now be described in relation to the following non-limiting examples.

In the following examples, first and second dough mixes were prepared. These were coextruded to provide a cookie precursor where the first dough formed an external dough portion of the precursor. The second dough formed an internal portion of the dough.

The doughs were coextruded so that the internal dough formed the central region of the dough. The extruded doughs were cut into cookie sized and shaped pieces with an iris cutter; this smears the external dough sufficiently to substantially encapsulate the internal dough. An example of the suitable apparatus used is disclosed in US4584203. The cookie precursors were sized between 40 and 50 mm and were spherical.

The cookie precursors were then baked for a time and under conditions sufficient to provide a baked cookie. The cookies weighed on average 33g.

Example 1

A cookie was prepared with dark chocolate inclusions. This recipe was found to provide an excellent dual texture consistency. No visible line could be seen in the final product to demark between the internal and outer doughs.

|  | wt% Dough before baking |
|---|---|
| EXTERNAL DOUGH | 49.08% |
| INTERNAL DOUGH | 41.72% |
| TOPPING | 9.20% |
| **TOTAL** | **100.00%** |

| **External Dough** | **wt% in dough** |
|---|---|
| Wheat Flour | 40.01% |
| Palm oil | 16.00% |
| Dark chocolate chips | 10.00% |
| Sugars | 24.00% |
| Liquid whole egg | 6.40% |
| Glucose syrup | 0.32% |
| Salt | 0.24% |
| Baking agents | 0.46% |
| Flavour | 0.15% |
| Water | 2.40% |
| **Total before baking** | **100.00%** |

| **Internal Dough** | **wt% in dough** |
|---|---|
| Palm oil | 10.39% |
| Cocoa butter | 10.39% |
| Starches | 12.19% |
| Sugars | 15.6% |
| Liquid whole egg | 13.98% |
| Glucose syrup | 23.97% |
| Glycerol | 10.69% |
| Flavour | 0.14% |
| Soy fiber | 2.20% |
| salt | 0.21% |

(continued)

| Internal Dough | wt% in dough |
|---|---|
| baking agents | 0.29% |
| Total before baking | 100.00% |

The starches contained native potato starch and pregelatinized corn starch.

In the tables, the term "sugars" refers to mono and disaccharides (DP1 and DP2, where DP stands for "degree of polymerization").

Glucose syrup contains sugars as well as oligosaccharides (maltotriose DP3, maltotetraose DP4, etc). The ratio of sugars over the sum of sugars and oligosaccharides, i.e. sugars/(sugars+oligosaccharides) is key to the texture contrast. In the external dough of Example 1, the value of this ratio is 99.6%, while the ratio is only 52% for the internal dough. The glucose syrup used in this Example contained around 30% sugars based on dry mass, the remainder being oligosaccharides.

The topping used in this Example was chocolate drops/chunks.

The following process of production was used:

External Dough mixing

The mixing of the external dough is done using a conventional mixer type. The mixing process starts with the mixing of the fat, the sugars and other powder ingredients (out of flour and baking powders). Then the liquid ingredients are added, subsequently the flour and the baking powders are added and blended until a homogeneous dough is obtained. Finally, the chocolate drops are added and blended with the dough. The dough water activity is approximately 0.78.

Internal Dough mixing

The mixing of the internal dough is done using a conventional mixer type. The mixing process starts with the mixing of the fats, the sugars and other powder ingredients (out of the baking powders). Then the liquid ingredients are added, subsequently the starches, the fiber and the baking powders are added and blended until a homogeneous dough is obtained. The dough water activity is approximately 0.73. The density of the dough is approximately 0.9.

Coextrusion of the two doughs

The two doughs are co-extruded with a conventional co-extrusion machine. The nozzles are designed to allow the targeted relative proportions of the external and internal dough to be reached. The coextruded row is cut with a conventional Iris cutter (diaphragm cutter) in order to obtain a co-extruded dough piece with the internal dough entirely encrusted in the external dough. The coextrusion of Example 1 was carried out at a process temperature of 18 °C. In general, a suitable process temperature is from 15 to 25 °C, preferably from 16 to 20 °C. The process temperature may be chosen in accordance with the specific fat blend used.

Calibration and glazing

The dough pieces are calibrated in height with a roller. A glazing is added on top of the dough pieces.

Topping depositing

Chocolate and/or other pieces are added as a topping on top of the surface of the dough pieces surface using a specific depositor. A roller pushes the deposited pieces slightly into the dough.

Baking

The dough pieces are baked using a baking profile (a temperature of approximately 200°C for 10 min) allowing the target product characteristics to be met in terms of colour, diameter, global moisture and water activity after cooling.

The products are quickly packed in an aluminium film or any other water barrier pack.

After equilibration the moisture of the external dough is 5.7wt% with Aw 0.49 and the moisture of the internal dough is 9.6wt% with Aw 0.5 which correspond on the total cookie to a total moisture at 7.1wt% with an Aw of 0.5.

The products have a shelf life of over 6 months.

Example 2

A cookie was prepared with a dark chocolate centre. This recipe was found to provide an excellent dual texture consistency. The central region of the cookie, which was entirely encapsulated within the lighter outer dough, provided a clearly darker chewy region.

The ratios and the composition of the external dough are the same as in example 1. The composition of the internal dough was as follows:

| Internal Dough | wt% in dough |
| --- | --- |
| Palm oil | 17.63% |
| Starches | 10.70% |
| Sugars | 8.6% |
| Liquid whole egg | 13.93% |
| Glucose syrup | 23.65% |
| Glycerol | 10.61% |
| Chocolate | 9.16% |
| Flavour | 0.13% |
| salt | 0.18% |
| baking agents | 0.29% |
| Cocoa powder low fat | 5.13% |
| water | 0.00% |
| **Total before baking** | **100.00%** |

The starches contained native potato starch and pregelatinized corn starch.

The topping was chocolate drops/chunks.

To produce this cookie, the same process steps as above are essentially followed, the only difference being that the liquid chocolate is added in the internal dough after mixing fats, sugars and other powder ingredients and before addition of liquid ingredients.

In Example 2, after baking, we see a difference of texture and colour between the two doughs.

Example 3

A cookie was prepared with dark chocolate inclusions. This recipe was found to provide an excellent dual texture consistency throughout the shelf life of the product. The ratios are the same as in example 1.

| External Dough | wt% in dough |
| --- | --- |
| Wheat Flour | 37.66% |
| Concentrated butter | 15.06% |
| Dark chocolate chips | 15.06% |
| sugars | 22.59% |
| Liquid whole egg | 6.03% |
| Glucose syrup | 0.30% |
| Salt | 0.50% |
| Baking agents | 0.44% |

(continued)

| External Dough | wt% in dough |
|---|---|
| Flavour | 0.10% |
| Water | 2.26% |
| **Total before baking** | **100.00%** |

| Internal Dough | wt% in dough |
|---|---|
| Palm oil | 11.00% |
| Cocoa butter | 15.00% |
| Starches | 5.80% |
| sugars | 15.6% |
| Liquid whole egg | 14.00% |
| Glucose syrup | 24.00% |
| Glycerol | 10.70% |
| Soy fiber | 3.00% |
| salt | 0.50% |
| baking agents | 0.29% |
| Flavour | 0.10% |
| **Total before baking** | **100.00%** |

The starches contained native potato starch and pregelatinized corn starch.

To produce this cookie, the same process steps as those detailed above were followed.

After equilibration, the moisture of the external dough is 4.6wt% with Aw 0.49 and the moisture of the internal dough is 6.5wt% with Aw 0.49, thus producing a cookie with a total moisture of 5.5wt% with an average Aw of 0.49.

Example 4

A cookie was prepared having a sweet inner dough with a savoury flavouring and a savoury outer dough, in accordance with the invention.

The external dough recipe is typical of a cracker dough.

| | wt% Dough before baking |
|---|---|
| EXTERNAL DOUGH | 63% |
| INTERNAL DOUGH | 37% |
| **TOTAL** | **100%** |
| **External Dough** | **wt% in dough** |
| Wheat flour | 74.84% |
| Palm oil | 7.48% |
| Sugars | 3.12% |
| Malt | 7.48% |
| Glucose syrup | 4.69% |
| Salt | 1.30% |
| Baking agents | 1% |

(continued)

| External Dough | wt% in dough |
|---|---|
| Processing aids | 0.09% |
| Water | 18.22% |
| **Total before baking** | **100.00%** |

| Internal Dough | wt% in dough |
|---|---|
| Palm oil | 13.49% |
| Cocoa butter | 7.49% |
| Dried cheese powder | 6.59% |
| Starches | 11.19% |
| sugars | 8.99% |
| Liquid whole egg | 13.99% |
| Glucose syrup | 23.98% |
| Glycerol | 10.69% |
| Flavour | 0.10% |
| Soy fiber | 3.00% |
| salt | 0.21% |
| baking agents | 0.29% |
| **Total before baking** | **100.00%** |

The starches contained native potato starch and pregelatinized corn starch.

To produce the cookie, a similar method was used to that detailed in Example 1. However, rather than coextruding the external and internal doughs, a "double sheeting" process was used. This involved sheeting the external dough in two parts through two different sheeting devices (an upper and lower device). The internal dough was then deposited on top of the lower sheeted dough, and the upper sheeted dough deposited on the internal dough.

Comparative Example 1

A cookie was made with flour in both the inner and outer doughs. It was found that the presence of 12wt% of wheat flour in the inner dough caused excessing spreading and internal dough leakage during baking. The ratios and the composition of the external dough are the same than in Example 1.

| Internal Dough | wt% in dough |
|---|---|
| Palm oil | 10.37% |
| Cocoa butter | 10.37% |
| Wheat Flour | 12.16% |
| Starches | 0.00% |
| Sugars | 15.55% |
| Liquid whole egg | 13.96% |
| Glucose syrup | 23.93% |
| Glycerol | 10.67% |
| Soy fiber | 2.19% |

(continued)

| Internal Dough | wt% in dough |
|---|---|
| Salt | 0.50% |
| Baking agents | 0.29% |
| **Total before baking** | **100.00%** |

Assessing the Dough Texture

$F_{AV}$ penetration testing

In a penetration or puncture test, a probe is made to penetrate into the test sample and the force necessary to achieve a certain penetration depth or the depth of penetration in a specified time, under defined conditions, is measured and used as an index of hardness, firmness, toughness or some other textural property of the food.

A needle penetrates the sample at a pre-selected speed until a given strain. The force/penetration distance diagram is recorded from which the texture parameters defining the crispiness of the product are obtained and reported.

Measurements were taken with a Texture Analyzer equipped with a 30 kg-load cell, capable to perform the measurements with the parameter settings as defined in this method and an appropriate software package (e.g. Stable Micro Systems TA-XTPlus/2/i). Temperature and humidity were controlled in a cabinet at standard ambient levels.

The test settings were as follows:

| Test mode | Compression |
|---|---|
| Pre-test speed | 1.0 mm/s |
| Test speed | 0.2 mm/s |
| Post-test speed | 10.0 mm/s |
| Target mode | Strain |
| Strain | 50 % |
| Trigger force | 20 g |

From the test, the average force Fav (total energy divided by the penetration amplitude) was extracted.

For each sample, 10 measurements are done in the border of the biscuit and 10 measurements in the centre of the product (visible internal dough). The values in the table here under are an average value of the 10 measurements. The value represents the $F_{AV}$ (average force) defined as the total energy needed to penetrate in the sample divided by the penetration amplitude.

The test was done on stabilized products aged of 3 months

- Example N°1 cookie made according to the disclosure
- Example N°3 made according to the disclosure
- A Standard cookie (Crispy cookie without dual texture)

| | $F_{AV}$ value Internal dough | $F_{AV}$ value External dough |
|---|---|---|
| **Example 1** | 3.6±0.2 | 19.9±5.9 |
| **Example 3** | 4.6±1.6 | 16.8 ±1.5 |
| **Std Granola Cookie** | 10.5 | 11.6 |

As shown by these examples, these $F_{AV}$ values, which characterize the force needed to penetrate into the sample, give us an indication about the hardness or the firmness of the dough. A high $F_{AV}$ value would be representative of a hard texture that can be linked to hardness in bite, crispiness, crunchiness attributes. A low $F_{AV}$ value will be representative of a soft dough offering less resistance to the mobile penetration.

All the cookie samples made according to the disclosure show a significant $F_{AV}$ difference between the internal and the external dough, demonstrating the products' expected dual texture which is then retained after baking and upon storage

As a control, measurements were done on the standard Cookie which is a fully crispy product. The results show no difference between the border and the centre of the product.

Further testing

Dough formulates were selected in order to illustrate both examples in accordance with the present disclosure.

Dough Compression Relaxation Testing

The dough was first characterized at room temperature by a classical compression test using a TAXT2 Texture Analyzer. This type of procedure is well-adapted for solid-like products like biscuit dough.

The dough was compressed between a plate and a cylinder of 1" (2.54 cm) diameter, at a rate of 1 mm/s up to 80% engineering strain. This was followed by a 45 seconds relaxation phase. The parameters extracted from this test are:

- The maximum force at the end of the compression Fmax (expressed in g)
- The percentage of elasticity from the relaxation phase which is the ratio between the force at the end of the 45 seconds holding time vs F max, expressed in %:

$$\% \text{ Elasticity} = 100x\ F_{(t=45)} / \text{Fmax.}$$

Values obtained for the different dough are given in the table below. STD is the standard deviation based on about 10 replicates.

| Dough type | Density | Fmax | STD | % Elasticity | STD |
|---|---|---|---|---|---|
| External dough | 1.08 | 2790 | 90 | 8% | 1 |
| Example 1 | 0.97 | 1160 | 130 | 10% | 1 |
| Comparative Example 1 | 0.96 | 420 | 70 | 6% | 1 |
| Example 3 | 0.99 | 1100 | 80 | 11% | 1 |

The compression testing showed that the external dough is the stiffest and densest dough.

The control internal doughs (Examples 1 and 3) have a similar rheology. Removing starches and replacing them by flour, (see Comparative Example 1) leads to softer dough.

All doughs showed a very low elasticity level, close to 10%, indicative of "plastic behaviour" (the deformation remains after the force is removed), which is appropriate for a coextrusion process.

Small-strain oscillatory measurements

Small-strain oscillatory measurements are carried out at a very low deformation (0.01%) and are therefore not disruptive. This allows the monitoring of dough rheological behaviour at rest while performing a temperature sweep, from 22°C to 132°C at a rate of 2°C/min, simulating baking.

The parameters extracted from the tests are the viscoelastic moduli G' (Pa), the elastic modulus, indicative of the solid behaviour and G" (Pa), the viscous modulus, indicative of the liquid behaviour.

A sample of 30g of dough was inserted into a measuring cup of a MCR 500 rheometer (Anton Paar) equipped with a 6-wings Vane geometry that was slowly inserted into the measuring cup. The table below gives the values of the viscoelastic moduli of the different doughs straight after mixing. G' and G" are respectively the solid and liquid moduli and tan delta is the ratio G"/G'.

| Dough type | G'(t0) (Pa) | G"(t0) (Pa) |
|---|---|---|
| External dough | $5.6 \times 10^4$ | $1.9 \times 10^4$ |

(continued)

| Dough type | G'(t0) (Pa) | G"(t0) (Pa) |
|---|---|---|
| Example 1 | $3.9 \times 10^4$ | $1.3 \times 10^4$ |
| Example 3 | $2.4 \times 10^4$ | $1.0 \times 10^4$ |
| Comparative Example 1 | $2.0 \times 10^4$ | $8.5 \times 10^3$ |

The elastic modulus G' is larger than the viscous one G", indicating a solid-like behaviour, in agreement with practical observations.

The evolution during the 1h lay time is relatively limited (Table 5): G' increases by a factor about 2 and G" by a factor about 1.5, indicating a strengthening of the solid-like behaviour. Indeed, tan-delta decreased from an average value of 0.40 to a value of 0.28.

| Dough type | Ratio G'(1 h)/G'(T0) | Ratio G"(1 h)/G"(T0) |
|---|---|---|
| External dough | 1.46 | 1.20 |
| Example 1 | 1.89 | 1.25 |
| Example 3 | 2.35 | 1.61 |
| Comparative Example 1 | 2.53 | 1.90 |

The dough samples were then heated up to 132°C at a rate of 2°C/min. All doughs show the same sequence of events: upon heating, the elastic modulus first decreases with increasing temperature, due to the melting of solid fats and thinning of the continuous phase. Between about 60°C and 100°C, the elastic modulus remains roughly constant while above 100°C, the elastic modulus increases again.

There were, however, significant differences between the doughs regarding the elastic modulus at room temperature and that at high temperature. The table below indicates the values of G' at 20°C and 90°C for the doughs of the different Examples.

| Dough | G'(20°C) | G'(90°C) |
|---|---|---|
| External dough | $8.1 \times 10^4$ | 617 |
| Example 1 | $5.7 \times 10^4$ | 113 |
| Example 3 | $7.3 \times 10^4$ | 279 |
| Comparative Example 1 | $5.1 \times 10^4$ | 1.5 |

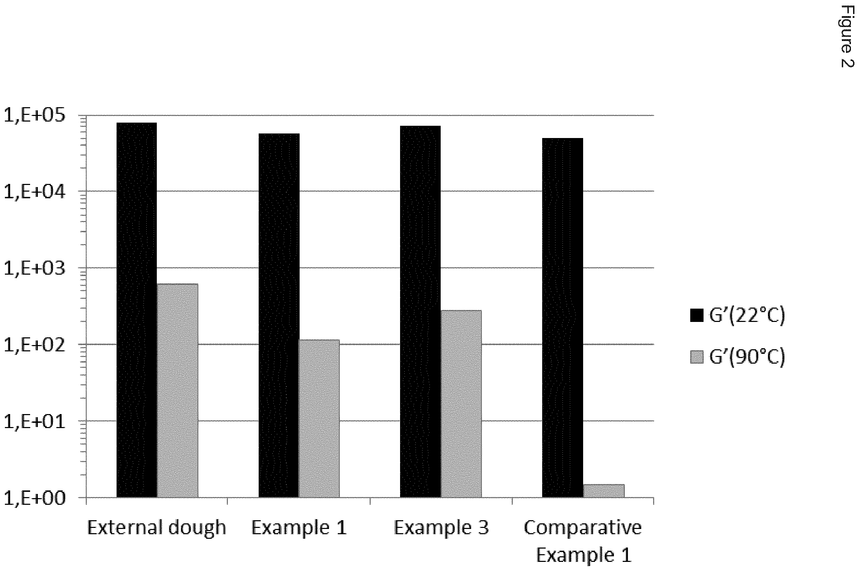

The results are shown in Figure 2.

The inner dough of Comparative Example 1 has a very low elastic modulus value at 90°C, compared to the Examples 1 and 3. The difference is about two orders of magnitude. This marked thinning upon heating explains why the dough of Comparative Example 1 leaches out of the external dough during baking, leading to unacceptable products.

Since the cookie contains an inner and external dough, the final shape/spreading of the product may be influenced by the relative difference in between the two doughs rheology. The ratio of G' for the inner dough vs the G' for the external dough was calculated at different temperatures. The ratio values depend on the formulation. For Example 1, the ratio is above 0.1 while it is close to 0.05 for Example 3. A very low value 0.001 is obtained for dough Comparative Example 1. In this case, the inner dough was too fluid compared to the external dough and leaked out of the product, giving an unacceptable finished product.

Water hydration capacity (WHC) of fibers

The test procedure was adapted from AACC 56-30.01, also described in Quinn and Paton (a practical measurement of the water hydration capacity of protein materials, Cereal Chem., 56, 38).

Fiber is dispersed in excess water and left to hydrate for 30 minutes with regular stirring. The dispersion was then centrifuged for 10 min at 2000g. The supernatant was discarded and the pellet was weighed. Approximate water holding capacity WHC was calculated according to:

$$WHC = (mass\ pellet - mass\ tube - mass\ fiber)/\ mass\ fiber$$

WHC is the amount of water held per g of fiber (unit g/g). The procedure was applied to insoluble ingredients, i.e. soy fiber, cocoa powder and potato starch.

Soy fiber has the highest WHC, followed by cocoa powder and native potato starch.

| Ingredient | WHC |
| --- | --- |
| Soy fiber | 5.6 |
| Cocoa powder low fat | 2.2 |
| Potato starch | 0.76 |

As shown above, the swelling ability of fibers impacts dough rheology. In the dough of Example 1, 2.2% of soy fiber gave the same product as 5% of cocoa powder low fat. Without wishing to be bound by theory, it can be observed that the product of the concentration (in g fibers per g of dough) and the WHC of the fiber (g water by g of fiber) is comparable in both cases.

$$C \times WHC = 5 \times 2.2 = 11\ g\ water\ /\ 100g\ of\ dough\ for\ cocoa\ powder$$

$$C \times WHC = 2.2 \times 5.6 = 12.3\ g\ water\ /\ 100g\ of\ dough$$

The product "C x WHC" may indicate the amount of water than can be "held" by 100g of dough, irrespective of the choice of the fiber.

Keeping C x WHC constant (at a value of 11), other insoluble ingredients can be proposed as replacers for cocoa powders or soy fibers, for instance fibers from cereal brans, vegetables, fruits, pulses and other plant materials.

It was found that by using the dual doughs discussed herein, it was possible to obtain a noticeable dual texture. This was perceptible to a sensory panel and could also be measured analytically by physical techniques, as discussed herein. Moreover, the cookies had no visible transition between the outside and inside of the cookie, which reinforces the impression of a "freshly-baked" texture. Thus, the cookie precursors described herein provide cookies having a soft centre and crunchy outer portion, i.e. the cookies have a dual texture.

## Claims

1. A cookie precursor comprising a first dough mix and a second dough mix in a ratio by weight of from 80:20 to 50:50, wherein the first dough mix comprises from 30 to 80 wt% of flour, and wherein the second dough mix comprises:

    (i) less than 5 wt% of flour, preferably substantially no flour,
    (ii) one or more starches and fibers in a total amount of from 5 to 20wt%, and
    (iii) a fat blend having a Solid Fat Content of at least 20 wt% at 20 ºC,

    wherein the second dough mix comprises fibers in an amount such that the amount by weight included in the second dough mix, expressed in g fibers for 100g of dough, multiplied by the water holding capacity (WHC) of the fiber, expressed in g water by g of fibre, is at least 10,
    and wherein the second dough mix forms one or more discrete regions within the first dough mix, and preferably wherein the second dough mix is entirely encompassed by the first dough mix..

2. The cookie precursor according to claim 1, wherein the first dough mix comprises from 30 to 50 wt% flour.

3. The cookie precursor according to any of the preceding claims, wherein the first dough mix comprises:

   fats in an amount of from 10 to 20wt%; and/or
   sugars in an amount of from 5 to 30wt%, preferably from 20 to 30wt%.

4. The cookie precursor according to any of the preceding claims, wherein the second dough mix comprises:

   fats in an amount of from 15 to 35wt%, preferably from 15 to 25wt%; and/or
   sugars in an amount of from 10 to 25wt%, preferably from 17 to 23wt%;and/or oligosaccharides in an amount of 10 to 25 wt%, preferably from 17 to 23wt%.

5. The cookie precursor according to any of the preceding claims, wherein the second dough mix comprises the one or more starches and fibers in a total amount of from 10 to 20 wt%.

6. The cookie precursor according to claim 5, wherein the starches and fibers comprise native potato starch and pregelatinized corn starch, and/or soy fibers and/or cocoa powder.

7. The cookie precursor according to any of the preceding claims, wherein the first and/or second dough mix further comprises a plurality of inclusions in an amount of from 5 to 25wt%, preferably from 5 to 15 wt%, by weight of the dough mix, preferably selected from nuts, jellies, nougat, honeycomb, flavoured chips such as chocolate chips , coconut, toffee, oats, seeds, caramel, fudge, hard candy, marshmallows, cherries, raisins and dried fruit, or mixtures of two or more thereof, and/or
   wherein the cookie precursor further comprises a topping in an amount of from 5 to 25wt%, preferably from 5 to 15wt%, by weight of the cookie precursor, wherein the topping is preferably selected from a glaze, a coating, such as a chocolate or yoghurt coating, nuts, jellies, nougat, honeycomb, oats, seeds, chocolate drops, toffee, fudge, hard candy, marshmallows, cherries, raisins and dried fruit, or mixtures of two or more thereof.

8. The cookie precursor according to any of the preceding claims, wherein the second dough mix comprises a fat blend having a Solid Fat Content of at least 30wt%, and at most 60wt% at 20 ºC.

9. A cookie obtainable by baking the cookie precursor of any of the preceding claims.

10. The cookie according to claim 9, wherein the cookie has a dual texture that is shelf stable for at least 6 months when stored at 20°C.

11. The cookie according to claim 9 or claim 10, wherein the cookie has an Aw of from 0.44 to 0.6, and/or
    wherein the cookie has a moisture content of from 5 to 9wt%.

12. A method for forming a cookie precursor according to any of claims 1 to 8, the method comprising:

    providing a first dough mix and a second dough mix in a ratio by weight of from 80:20 to 50:50,
    forming a cookie precursor from the first and second dough mixes,
    wherein the first dough mix comprises from 30 to 80 wt% of flour, and
    wherein the second dough mix comprises:

    (i) less than 5 wt% of flour, preferably substantially no flour,
    (ii) one or more starches and fibers in a total amount of from 5 to 20wt%, and
    (iii) a fat blend having a Solid Fat Content of at least 20 wt% at 20 ºC,

    wherein the second dough mix comprises fibers in an amount such that the product of the amount by weight included in the second dough mix multiplied by the water holding capacity (WHC) of the fiber is at least 10.

13. The method according to claim 12, wherein the first dough mix and the second dough mix are coextruded to form the cookie precursor.

**Patentansprüche**

1. Keksvorläufer, umfassend eine erste Teigmischung und eine zweite Teigmischung in einem Gewichtsverhältnis von 80:20 bis 50:50,

   wobei die erste Teigmischung 30 bis 80 Gew.-% Mehl umfasst und
   wobei die zweite Teigmischung Folgendes umfasst:

   (i) weniger als 5 Gew.-% Mehl, vorzugsweise im Wesentlichen kein Mehl,
   (ii) eine oder mehrere Stärken und Ballaststoffe in einer Gesamtmenge von 5 bis 20 Gew.-% und
   (iii) eine Fettmischung mit einem Festfettgehalt von mindestens 20 Gew.-% bei 20 °C,

   wobei die zweite Teigmischung Ballaststoffe in einer solchen Menge umfasst, dass die in der zweiten Teigmischung enthaltene gewichtsbezogene Menge, ausgedrückt in g Ballaststoffe pro 100 g Teig, multipliziert mit der Wasserhaltekapazität (WHC) des Ballaststoffs, ausgedrückt in g Wasser pro g Ballaststoff, mindestens 10 beträgt, und wobei die zweite Teigmischung einen oder mehrere diskrete Bereiche innerhalb der ersten Teigmischung bildet und wobei die zweite Teigmischung vorzugsweise vollständig von der ersten Teigmischung umschlossen ist.

2. Keksvorläufer nach Anspruch 1, wobei die erste Teigmischung 30 bis 50 Gew.-% Mehl umfasst.

3. Keksvorläufer nach einem der vorstehenden Ansprüche, wobei die erste Teigmischung Folgendes umfasst:

   Fette in einer Menge von 10 bis 20 Gew.-%; und/oder
   Zucker in einer Menge von 5 bis 30 Gew.-%, vorzugsweise von 20 bis 30 Gew.-%.

4. Keksvorläufer nach einem der vorstehenden Ansprüche, wobei die zweite Teigmischung Folgendes umfasst:

   Fette in einer Menge von 15 bis 35 Gew.-%, vorzugsweise von 15 bis 25 Gew.-%; und/oder
   Zucker in einer Menge von 10 bis 25 Gew.-%, vorzugsweise von 17 bis 23 Gew.-%; und/oder
   Oligosaccharide in einer Menge von 10 bis 25 Gew.-%, vorzugsweise von 17 bis 23 Gew.-%.

5. Keksvorläufer nach einem der vorstehenden Ansprüche, wobei die zweite Teigmischung die eine oder die mehreren Stärken und Ballaststoffe in einer Gesamtmenge von 10 bis 20 Gew.-% umfasst.

6. Keksvorläufer nach Anspruch 5, wobei die Stärken und Ballaststoffe native Kartoffelstärke und vorgelatinierte Maisstärke und/oder Soja-Ballaststoffe und/oder Kakaopulver umfassen.

7. Keksvorläufer nach einem der vorstehenden Ansprüche, wobei die erste und/oder zweite Teigmischung ferner mehrere Einschlüsse in einer Menge von 5 bis 25 Gew.-%, vorzugsweise von 5 bis 15 Gew.-% der Teigmischung umfassen, vorzugsweise ausgewählt aus Nüssen, Gelees, Nougat, Honigwaben, aromatisierten Stückchen, wie Schokoladenstückchen, Kokosnuss, Toffee, Hafer, Samen, Karamell, Fondant, Hartbonbon, Marshmallows, Kirschen, Rosinen und Trockenobst oder Mischungen von zwei oder mehr davon, und/oder wobei der Keksvorläufer ferner einen Belag in einer Menge von 5 bis 25 Gew.-%, vorzugsweise von 5 bis 15 Gew.-% des Keksvorläufers umfasst, wobei der Belag vorzugsweise ausgewählt ist aus einer Glasur, einer Beschichtung, wie einer Schokoladen- oder Joghurtbeschichtung, Nüssen, Gelees, Nougat, Honigwaben, Hafer, Samen, Schokoladentropfen, Toffee, Fondant, Hartbonbon, Marshmallows, Kirschen, Rosinen und Trockenobst oder Mischungen von zwei oder mehr davon.

8. Keksvorläufer nach einem der vorstehenden Ansprüche, wobei die zweite Teigmischung eine Fettmischung mit einem Festfettgehalt von mindestens 30 Gew.-% und höchstens 60 Gew.-% bei 20 °C umfasst.

9. Keks, herstellbar durch Backen des Keksvorläufers nach einem der vorstehenden Ansprüche.

10. Keks nach Anspruch 9, wobei der Keks eine duale Textur aufweist, die bei Lagerung bei 20 °C für mindestens 6 Monate haltbar ist.

11. Keks nach Anspruch 9 oder Anspruch 10, wobei der Keks eine Aw von 0,44 bis 0,6 aufweist und/oder wobei der Keks einen Feuchtigkeitsgehalt von 5 bis 9 Gew.-% aufweist.

**12.** Verfahren zum Bilden eines Keksvorläufers nach einem der Ansprüche 1-8, wobei das Verfahren Folgendes umfasst:

Bereitstellen einer ersten Teigmischung und einer zweiten Teigmischung in einem Gewichtsverhältnis von 80:20 bis 50:50,
Bilden eines Keksvorläufers aus der ersten und der zweiten Teigmischung,
wobei die erste Teigmischung von 30 bis 80 Gew.-% Mehl umfasst und
wobei die zweite Teigmischung Folgendes umfasst:

(i) weniger als 5 Gew.-% Mehl, vorzugsweise im Wesentlichen kein Mehl,
(ii) eine oder mehrere Stärken und Ballaststoffe in einer Gesamtmenge von 5 bis 20 Gew.-% und
(iii) eine Fettmischung mit einem Festfettgehalt von mindestens 20 Gew.-% bei 20 °C,

wobei die zweite Teigmischung Ballaststoffe in einer solchen Menge umfasst, dass das Produkt der gewichtsbezogenen Menge, die in der zweiten Teigmischung eingeschlossen ist, multipliziert mit der Wasserhaltekapazität (WHC) des Ballaststoffes mindestens 10 beträgt.

**13.** Verfahren nach Anspruch 12, wobei die erste Teigmischung und die zweite Teigmischung coextrudiert werden, um den Keksvorläufer zu bilden.

**Revendications**

**1.** Précurseur de biscuit sucré comprenant un premier mélange de pâte et un deuxième mélange de pâte dans un rapport en poids allant de 80:20 à 50:50,
dans lequel le premier mélange de pâte comprend de 30 à 80 % en poids de farine, et
dans lequel le deuxième mélange de pâte comprend :

(i) moins de 5 % en poids de farine, de préférence essentiellement pas de farine,
(ii) un ou plusieurs amidons et fibres en une quantité totale allant de 5 à 20 % en poids, et
(iii) un mélange de matières grasses ayant une teneur en matières grasses solides d'au moins 20 % en poids à 20 °C,

dans lequel le deuxième mélange de pâte comprend des fibres en une quantité telle que la quantité en poids incluse dans le deuxième mélange de pâte, exprimée en g de fibres pour 100 g de pâte, multipliée par la capacité de retenue d'eau (WHC) de la fibre, exprimée en g d'eau par g de fibre, vaut au moins 10.
et dans lequel le deuxième mélange de pâte forme une ou plusieurs régions individuelles au sein du premier mélange de pâte et de préférence dans lequel le deuxième mélange de pâte est entièrement englobé par le premier mélange de pâte.

**2.** Précurseur de biscuit sucré selon la revendication 1, dans lequel le premier mélange de pâte comprend de 30 à 50 % en poids de farine.

**3.** Précurseur de biscuit sucré selon l'une quelconque des revendications précédentes, dans lequel le premier mélange de pâte comprend :

des matières grasses en une quantité allant de 10 à 20 % en poids ; et/ou des sucres en une quantité allant de 5 à 30 % en poids, de préférence de 20 à 30 % en poids.

**4.** Précurseur de biscuit sucré selon l'une quelconque des revendications précédentes, dans lequel le deuxième mélange de pâte comprend :

des matières grasses en une quantité allant de 15 à 35 % en poids, de préférence de 15 à 25 % en poids ; et/ou des sucres en une quantité allant de 10 à 25 % en poids, de préférence de 17 à 23 % en poids ; et/ou des oligosaccharides en une quantité de 10 à 25 % en poids, de préférence de 17 à 23 % en poids.

**5.** Précurseur de biscuit sucré selon l'une quelconque des revendications précédentes, dans lequel le deuxième mélange de pâte comprend le ou les amidons et fibres en une quantité totale allant de 10 à 20 % en poids.

**6.** Précurseur de biscuit sucré selon la revendication 5, dans lequel les amidons et fibres comprennent de l'amidon de pomme de terre natif et de l'amidon de maïs prégélatinisé, et/ou des fibres de soja et/ou de la poudre de cacao.

**7.** Précurseur de biscuit sucré selon l'une quelconque des revendications précédentes, dans lequel les premier et/ou deuxième mélanges de pâte comprennent en outre une pluralité d'inclusions en une quantité allant de 5 à 25 % en poids, de préférence de 5 à 15 % en poids, en poids du mélange de pâte, choisies de préférence parmi des fruits à coques, des gelées, du nougat, du miel, des copeaux aromatisés tels que des copeaux de chocolat, de la noix de coco, du caramel fondant, des flocons d'avoine, des graines, du caramel, du fudge, un bonbon dur, des guimauves, des cerises, des raisins et des fruits secs, ou des mélanges de deux de ceux-ci ou plus, et/ou dans lequel le précurseur de biscuit sucré comprend en outre un nappage en une quantité allant de 5 à 25 % en poids, de préférence de 5 à 15 % en poids, en poids du précurseur de biscuit sucré, dans lequel le nappage est de préférence choisi parmi un glaçage, un enrobage, tel qu'un enrobage de chocolat ou de yaourt, des fruits à coques, des gelées, du nougat, du miel, des flocons d'avoine, des graines, des éclats de chocolat, du caramel fondant, du fudge, un bonbon dur, des guimauves, des cerises, des raisins et des fruits secs, ou des mélanges de deux de ceux-ci ou plus.

**8.** Précurseur de biscuit sucré selon l'une quelconque des revendications précédentes, dans lequel le deuxième mélange de pâte comprend un mélange de matières grasses ayant une teneur en matières grasses solides d'au moins 30 % en poids, et d'au plus 60 % en poids à 20 °C.

**9.** Biscuit sucré pouvant être obtenu par cuisson du précurseur de biscuit sucré selon l'une quelconque des revendications précédentes.

**10.** Biscuit sucré selon la revendication 9, dans lequel le biscuit sucré a une texture double qui a une durée de conservation d'au moins 6 mois lors d'un stockage à 20 °C.

**11.** Biscuit sucré selon la revendication 9 ou la revendication 10, dans lequel le biscuit sucré a une activité de l'eau Aw allant de 0,44 à 0,6, et/ou dans lequel le biscuit sucré a une teneur en humidité allant de 5 à 9 % en poids.

**12.** Procédé de formation d'un précurseur de biscuit sucré, selon l'une quelconque des revendications 1 à 8, le procédé comprenant :

la fourniture d'un premier mélange de pâte et d'un deuxième mélange de pâte dans un rapport en poids allant de 80:20 à 50:50,
la formation d'un précurseur de biscuit sucré à partir des premier et deuxième mélanges de pâte,
dans lequel le premier mélange de pâte comprend de 30 à 80 % en poids de farine, et
dans lequel le deuxième mélange de pâte comprend :

(i) moins de 5 % en poids de farine, de préférence essentiellement pas de farine,
(ii) un ou plusieurs amidons et fibres en une quantité totale allant de 5 à 20 % en poids, et
(iii) un mélange de matières grasses ayant une teneur en matières grasses solides d'au moins 20 % en poids à 20 °C,

dans lequel le deuxième mélange de pâte comprend des fibres en une quantité telle que le produit de la quantité en poids incluse dans le deuxième mélange de pâte multipliée par la capacité de retenue d'eau (WHC) de la fibre vaut au moins 10.

**13.** Procédé selon la revendication 12, dans lequel le premier mélange de pâte et le deuxième mélange de pâte sont coextrudés pour former le précurseur de biscuit sucré.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4251201 A
- US 4882185 A
- US 4584203 A
- EP 0181821 A
- EP 0031718 A
- EP 0208509 A
- EP 0219425 A
- US 4840803 A